# EUROPÄISCHE PATENTSCHRIFT

(11) **EP 3 153 004 B1**
(45) Veröffentlichungstag und Bekanntmachung des Hinweises auf die Patenterteilung: **28.03.2018**
(21) Anmeldenummer: 16002104.4
(22) Anmeldetag: 29.09.2016
(51) Int. Cl.: A01D 41/14, A01D 57/20

(54) **SCHNEIDWERK MIT VERSTELLBARER SEITENRAHMENENTLASTUNG**
CUTTER WITH ADJUSTABLE SIDE FRAME RELIEF
BARRE DE COUPE COMPRENANT UN DISPOSITIF RÉGLABLE DESTINÉ À SOULAGER LE CADRE LATÉRAL

(30) Priorität: 05.10.2015 DE 102015116892
(43) Veröffentlichungstag der Anmeldung: 12.04.2017
(73) Patentinhaber: Carl Geringhoff GmbH & Co. KG, 59227 Ahlen (DE)
(72) Erfinder: SUDHUES, Steffen, 59227 Ahlen (DE); SCHULZE RÜCKAMP, Jan Bernd, 59320 Enniger (DE); AMELINGMEYER, Jens, 49078 Osnabrück-Hellern (DE); SCHULZE SELTING, Stephan, 59320 Enniger (DE)
(74) Vertreter: Weeg, Thomas

(56) Entgegenhaltungen:
- DE-A1- 19 525 495
- DE-A1-102007 035 796
- US-A1- 2008 295 473
- US-B2- 6 675 568

## Beschreibung

Die vorliegende Erfindung bezieht sich auf ein Schneidwerk mit mehreren gelenkig miteinander verbundenen Rahmenabschnitten, die jeweils eine Teilarbeitsbreite des Schneidwerks bilden, wobei äußere Seitenrahmenabschnitte mit einem mittleren Rahmenabschnitt über ein zwischen einer federnden Einstellung und einer gesperrten Einstellung verstellbares Entlastungselement miteinander verbunden sind.

Ein gattungsgemäßes Schneidwerk ist aus der Schrift 6,675,568 bekannt. Das dort offenbarte Schneidwerk weist einen Mittelrahmenabschnitt und zwei gelenkig damit verbundene äußere Seitenrahmenabschnitte auf. Da der Ackerboden über die Gesamtarbeitsbreite des Schneidwerks bei der Vorfahrt der Erntemaschine, an der das Schneidwerk im Einsatz befestigt ist, nicht eben bleibt, sondern Erhebungen und Vertiefungen aufweisen kann, sollen sich die einzelnen Rahmenabschnitte mit ihren Teilarbeitsbreiten durch ihre gelenkige Verbindung miteinander besser an eine unebene Bodenkontur anpassen. Insbesondere die Seitenrahmenabschnitte können gegenüber dem Mittelrahmenabschnitt mit ihren freien Enden nach oben oder unten verschwenken, um sich dadurch an eine in seitlicher Richtung gegenüber der Querachse des Mittelrahmenabschnitts ansteigende oder abfallende Bodenkontur anzupassen.

Um die Reaktionsgeschwindigkeit der Seitenrahmenabschnitte zu erhöhen und eine Bodenanpassung zu erleichtern, ohne dabei Beschädigungen an den Seitenrahmenabschnitten zu riskieren, sind die Seitenrahmenabschnitte mit dem Mittelrahmenabschnitt jeweils über ein Entlastungselement verbunden. Das Entlastungselement trägt einen Teil des Gewichts des Seitenrahmenabschnitts und leitet diesen in den Rahmen des Mittelrahmenabschnitts ein. Der verbleibende Druck, mit dem sich ein Seitenrahmenabschnitt auf dem Boden abstützt, wird dadurch erheblich verringert. Indem das Entlastungselement als Feder ausgebildet ist, können die Seitenrahmenabschnitte bei einer sich während der Ernte verändernden Bodenkontur mit ihren freien Enden gegen die Federkraft nach oben oder unten schwingen.

Nun ist es nicht in allen Gebrauchssituationen des Schneidwerks so, dass ein freies Schwingen der Seitenrahmenabschnitte gegen die Feder im Entlastungselement erwünscht ist. Bei dem aus dem Stand der Technik bekannten Schneidwerk können deshalb die Federn in den Entlastungselementen durch eine wahlweise einlegbare starre Sperre überbrückt werden. Mit dieser Sperre können die Entlastungselemente also nur entweder frei federnd oder starr betrieben werden.

Es ist die Aufgabe der vorliegenden Erfindung, eine Verstellmöglichkeit zu schaffen, die eine größere Vielfalt bei der Einstellung des Federverhaltens des Entlastungselement ermöglicht und die leicht bedienbar ist.

Die Aufgabe wird für ein gattungsgemäßes Schneidwerk gelöst, indem das Entlastungselement eine in Belastungsrichtung bewegliche Feder und einen in Belastungsrichtung starren Raumkörper aufweist, wobei die Feder mit dem Seitenrahmenabschnitt über einen Bolzen verbunden ist, der in einem am starren Raumkörper ausgebildeten Langloch geführt ist, wobei der Federweg der Feder durch ein zwischen verschiedenen Schwenkstellungen verschwenkbares Anschlagelement über an dem Anschlagelement ausgebildete Anschläge verstellbar ist, und das Anschlagelement mindestens zwei verschiedene Anschläge aufweist.

Durch die Verwendung eines Anschlagelements mit mindestens zwei verschiedenen Anschlägen sind die Einstellmöglichkeiten für das Entlastungselement erweitert. Das Entlastungselement kann dadurch nicht mehr nur zwischen freiem Federn und gesperrter Feder hin und her verstellt werden, sondern es ist möglich, dem jeweiligen Einsatzzweck entsprechend die Federbewegung in eine oder beide Richtungen gezielt zu beschränken.

In dem Anschlagelement können beispielsweise Anschläge ausgebildet sein, durch die das Entlastungselement in einem Bereich eine Ein- und Ausfederbewegung zulässt. So kann dieser Bereich beispielsweise so gewählt sein, dass ein Seitenrahmenabschnitt nach Bedarf frei um 4° nach oben oder unten gegenüber der Querachse des Mittelrahmenabschnitts ein- oder ausfedern kann, bis der Bolzen an die Anschläge anschlägt. Dies entspricht dem beim Erntebetrieb auftretenden normalen Schwenkbereich der Seitenteilrahmen. Über das Anschlagelement können also Anschläge realisiert werden, die die Schwenkbewegungen der Seitenteilrahmen im normalen Erntebetrieb abdecken. Gesonderte Endanschläge für das Entlastungelement können dadurch entfallen.

In einer anderen Schwenkstellung des Anschlagelements kann ein Anschlag wirksam sein, der eine Einfederbewegung ab einer bestimmten Schwenklage begrenzt, und in einer weiteren Schwenkstellung kann ein Anschlag wirksam sein, der eine Ausfederbewegung ab einer bestimmten Schwenklage begrenzt. So ist es beispielsweise bei Straßentransport eines Schneidwerks nicht wünschenswert, dass ein Seitenrahmenabschnitt nach oben federn kann, nach unten aber durchaus. Bei der Rapsernte, bei der das Schneidwerk in einer Mindesthöhe gehalten werden muss, ist es umgekehrt nicht wünschenswert, dass ein Seitenrahmenabschnitt des Schneidwerks nach unten ausfedert, nach oben ist das jedoch hilfreich.

Als starrer Raumkörper kommen runde, eckige oder ovale Rohre, Profile oder sonstige Konstruktionen in Betracht, die in Belastungsrichtung bei den normalerweise auftretenden Belastungen unflexibel sind.

Nach einer Ausgestaltung der Erfindung ist das Anschlagelement als verschwenkbares Blech ausgestaltet, das eine Kulisse aufweist, die je nach Schwenkstellung des Anschlagelements die jeweiligen Anschläge ausbildet. Das Blech kann in einem Schwenkbolzen gelagert sein, der an dem starren Raumkörper befestigt ist. Das Blech kann doppelt an gegenüberliegenden Seiten des starren Raumkörpers vorhanden sein, wobei die Konstruktion durch einen weiteren Verbindungsbolzen stabilisiert wird. In ein Blech kann leicht eine Kulisse eingestanzt oder gelasert werden. Diese Ausführung ist insgesamt leicht, kostengünstig und funktionssicher.

Nach einer Ausgestaltung der Erfindung weist das Anschlagelement mindestens eine erste Schwenkstellung, in der die Anschläge so ausgestaltet sind, dass der Federweg der Feder von der Nulllage des Seitenrahmenabschnitts aus sowohl ein Einfedern als auch ein Ausfedern der Feder zulässt, sowie eine zweite Schwenkstellung, in der die Anschläge so ausgestaltet sind, dass der Federweg der Feder von der Nulllage des Seitenrahmenabschnitts aus nur ein Einfedern oder ein Ausfedern der Feder zulässt, auf. Während die Lage der Anschläge in der ersten Schwenkstellung ein Ein- und Ausfedern der Feder in beide Richtungen zulässt und insoweit dem normalen Betrieb entspricht, schafft die zweite Schwenkstellung die Möglichkeit, entweder das Einfedern oder das Ausfedern der Feder zu blockieren. Bei einer dritten Schwenkstellung ist eine Einstellung des Anschlagelements in Schwenkstellungen möglich, die in einer ersten Schwenkstellung dem Normalbetrieb, einer zweiten Schwenkstellung der Blockierung des Einfederns - das Ausfedern ist hier immer noch möglich - und einer dritten Schwenkstellung der Blockierung des Ausfederns - das Einfedern ist in dieser Stellung immer noch möglich - entsprechen.

Nach einer Ausgestaltung der Erfindung ist das Anschlagelement schwenkbar am starren Raumkörper befestigt. Der starre Raumkörper bildet ein gutes Widerlager, in dem das Anschlagelement gehalten werden kann. Da sich der starre Raumkörper immer mit der Feder und dem Seitenrahmenabschnitt bewegt, entstehen keine Relativbewegungen zwischen dem Widerlager, dem am starren Raumkörper ausgebildeten Langloch und dem Anschlagelement.

Nach einer Ausgestaltung der Erfindung weist das Anschlagelement in einer mittleren Stellung den größten Verstellbereich und in den von der mittleren Stellung abweichenden Stellungen kleinere Verstellbereiche zwischen den Anschlägen auf. Bei dieser Lösung kann das Anschlagelement durch einen Verstellvorgang ausgehend von der im Normalfall gewählten Mittelstellung in einer Stufe in eine andere Stellung verstellt werden, in der die Feder in eine oder beide Richtungen durch einen Anschlag mit einem geringeren Abstand zur Nulllage früher blockiert ist.

Nach einer Ausgestaltung der Erfindung ist der starre Raumkörper als Rohr ausgebildet, in dessen Innenraum die Feder eingesetzt ist. Bei dieser Ausgestaltung bleibt der Kraftfluss zwischen dem Seitenrahmenabschnitt und dem mittleren Rahmenabschnitt identisch, unabhängig davon, ob das Entlastungselement über die Feder oder den starren Raumkörper trägt. Die Feder ist dazu an einem Ende über einen Tragbolzen ortsfest mit dem starren Raumkörper verbunden und am anderen Ende im Langloch geführt. Im Rohrinneren ist die Feder gegen Schmutz und Korrosion geschützt. Auch ist die Feder besser gegen Verletzungsgefahren für Bedienpersonen abgeschirmt.

Nach einer Ausgestaltung der Erfindung ist der starre Raumkörper über ein Kugelgelenk mit dem mittleren Rahmenabschnitt verbunden und zwischen dem Kugelgelenk und dem starren Raumkörper ist ein Federelement eingesetzt. Die Feder kann als Spiralfeder oder als Tellerfederpaket ausgebildet sein. Durch die zusätzliche Feder ist es möglich, Stöße, die auf das Seitenrahmenelement einwirken, auch dann zumindest etwas abzufedern, wenn das Entlastungselement durch die entsprechende Schwenkstellung des Anschlagelements über den starren Raumköper trägt.

Nach einer Ausgestaltung der Erfindung ist das Anschlagelement mit einem in die Verstellrichtung flexiblen Verstellhebel verbunden, und beabstandet zum Anschlagelement ist eine Befestigungskulisse angeordnet, in der der Verstellhebel in einer der aktuellen Stellung des Anschlagelements entsprechenden oder in einer der aktuellen Stellung des Anschlagelements nicht entsprechenden Stellung fixierbar ist. Der Verstellhebel dient zunächst dem Zweck, das Anschlagelement in einer vorgewählten Schwenkstellung zu halten. Der Verstellhebel kann aber auch durch seine Flexibilität in die Verstellrichtung dazu genutzt werden, die Schwenkstellung des Anschlagelements mit nur einer einzigen Bedienperson zu verstellen. Dazu wird der Verstellhebel aus einer Position in der Befestigungskulisse, die der aktuellen Stellung des Anschlagelements entspricht, in eine andere Position in der Befestigungskulisse bewegt und dort festgelegt, die einer neu einzustellenden Schwenklage des Anschlagelements entspricht. Dabei werden im Verstellhebel Rückstellkräfte aufgebaut. Wenn die Bedienperson sodann in der Kabine der Erntemaschine das Schneidwerk um die in die Fahrtrichtung weisende Maschinenlängsachse rotieren lässt, kann sich das Seitenrahmenelement, dessen Anschlagelement verstellt werden soll, in eine Ein- oder Ausfederrichtung der Feder bewegen. Bei dieser Federbewegung bewegt sich auch der im Langloch geführte Bolzen in die entsprechende Richtung, bis dabei der Bolzen an einem Anschlag vorbeigleitet, der der neu einzustellenden Schwenkstellung des Anschlagelements entspricht. Durch die Rückstellkräfte, die bei der Verstellung des Verstellhebels in die neue Position aufgebaut wurden, wird das Anschlagelement in eine neue Schwenkstellung bewegt, die der zuvor eingestellten Position des Verstellhebels entspricht. Auf diese Weise ist das Anschlagelement von nur einer Bedienperson in eine neue Schwenkstellung verstellbar.

Nach einer Ausgestaltung der Erfindung bilden einzelne Anschläge in der Kulisse den Anschlag für mehrere Verstellbereiche. Die Verstellwege zur Einstellung der Verstellbereiche können dadurch kurz gehalten werden. Die Kulisse im Anschlagelement ist ebenfalls kompakt.

Es wird ausdrücklich darauf hingewiesen, dass die vorstehend beschriebenen Ausgestaltungen der Erfindung jeweils für sich, aber auch in beliebigen Kombinationen untereinander mit dem Gegenstand des Hauptanspruchs kombiniert werden können, soweit dem keine technisch zwingenden Hindernisse entgegen stehen.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher erläutert werden. Es zeigen:
- Fig. 1:: eine Teilansicht eines Schneidwerks von hinten,
- Fig. 2:: eine ausschnittweise Vergrößerung des Langlochs und des Anschlagelements,
- Fig. 3:: eine ausschnittweise Vergrößerung des oberen Endes des starren Raumkörpers,
- Fig. 4:: eine ausschnittweise Ansicht von schräg hinten auf den Verstellhebel,
- Fig. 5:: eine Ansicht des Anschlagelements in einer zweiten Schwenkstellung, und
- Fig. 6:: eine Ansicht des Anschlagelements in einer dritten Schwenkstellung.

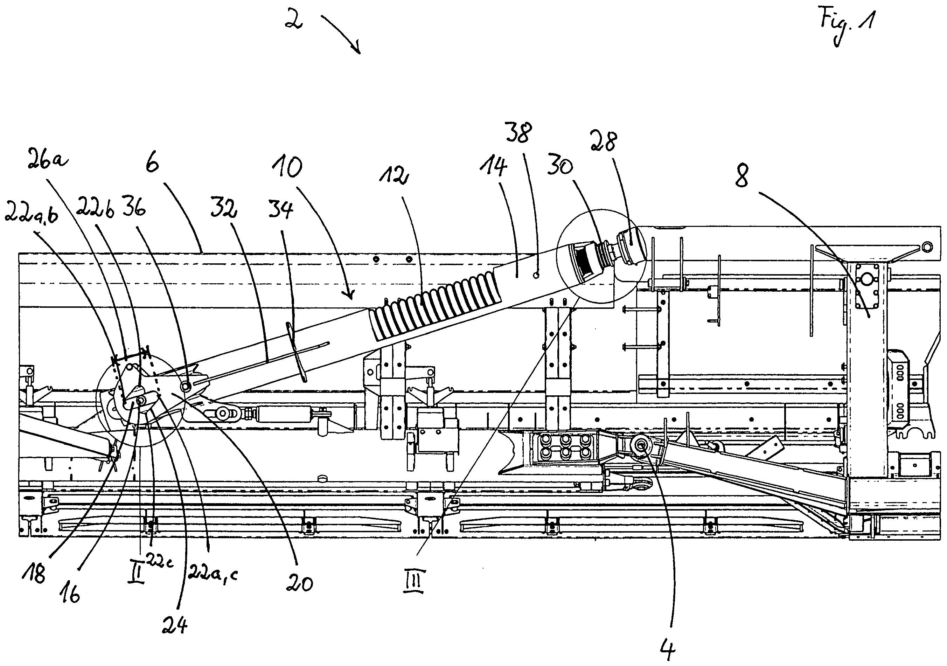

In Fig. 1 ist eine Teilansicht eines Schneidwerks 2 von hinten gezeigt. Das Schneidwerk 2 wird mit seiner Vorderseite in den stehenden Bestand eines Ernteguts hineingefahren, um das Erntegut zu schneiden, mittig zusammenzuführen und nach hinten in den Einzugskanal einer Erntemaschine abzugeben. Das Schneidwerk 2 verfügt über eine Gesamtarbeitsbreite, die sich zusammensetzt aus den Teilarbeitsbreiten der gelenkig miteinander verbundenen Rahmenabschnitte. Ein Schneidwerk 2 kann beispielsweise aus drei oder mehr gelenkig miteinander verbundenen Rahmenabschnitten zusammengesetzt sein. Der in Fig. 1 gezeigte Seitenrahmenabschnitt 6 ist mit dem mittleren Rahmenabschnitt 8 über ein Gelenk 4 verbunden. Über das Gelenk 4 kann der Seitenrahmenabschnitt 6 mit seinem freien Ende nach oben oder unten schwenken.

Der Seitenrahmenabschnitt 6 ist mit dem mittleren Rahmenabschnitt 8 zusätzlich noch über ein Entlastungselement 10 verbunden. Das Entlastungselement 10 überträgt einen Teil des Gewichts des Seitenrahmenabschnitts 6 auf den Rahmen des mittleren Rahmenabschnitts 8. Dadurch verringert sich der Druck, mit dem der Seitenrahmenabschnitt 6 über den Boden gleitet.

Im Ausführungsbeispiel weist das Entlastungselement 10 eine Feder 12 und einen starren Raumkörper 14 auf. Die Feder 12 ist in den im Ausführungsbeispiel als Rohr ausgebildeten Innenraum des starren Raumkörpers 14 eingesetzt. Während die Feder 12 eine federnde Anpassungsbewegung des Seitenrahmenabschnitts 6 zulässt, wenn sich der Boden darunter absenkt oder ansteigt, hält der starre Raumkörper 14 den Seitenrahmenabschnitt 6 in einer festen räumlichen Lage relativ zum mittleren Rahmenabschnitt 8, je nachdem, ob sich die Feder 12 in die Richtung der Anpassungsbewegung bewegen kann oder nicht.

Ob eine Anpassungsbewegung der Feder 12 möglich ist, richtet sich im Ausführungsbeispiel danach, ob der Bolzen 16, der im Langloch 18 gelagert ist und an dem die Feder 12 mit einem Ende festgelegt ist, in Richtung der Anpassungsbewegung noch beweglich ist oder nicht. Die Beweglichkeit des Bolzens 16 im Langloch 18 wird durch das Anschlagelement 20 begrenzt. An dem Anschlagelement 20 sind mehrere Anschläge 22 in unterschiedlichen Positionen in einer Kulisse 24 ausgebildet. Je nach Schwenklage des Anschlagelements 20 ergeben sich unterschiedliche Verstellbereiche 26, in denen der Bolzen 16 innerhalb des Langlochs 18 beweglich ist. Schlägt der Bolzen 16 bei einer Verstellbewegung an einen Anschlag 22 an, ist dadurch gleichzeitig eine weitere Bewegung der Feder 12 in die durch den Anschlag 22 begrenzte Richtung blockiert.

Mit dem mittleren Rahmenabschnitt 8 ist das Entlastungselement 10 über ein Kugelgelenk 28 verbunden. Das Kugelgelenk 28 ermöglicht es dem Entlastungselement 10, sich in seiner räumlichen Lage den Schwenkbewegungen des Seitenrahmenabschnitts 6 anzupassen. Das Entlastungselement 10 ist gegen den mittleren Rahmenabschnitt 8 zusätzlich noch durch ein Federelement 30 federnd abgestützt. Über das Federelement 30, das im Ausführungsbeispiel als Tellerfederpaket ausgebildet ist, können Stöße und Schläge aus dem Seitenrahmenabschnitt 6 auf den mittleren Rahmenabschnitt 8 abgefedert werden.

In Fig. 1 ist schließlich noch ein Verstellhebel 32 gezeigt, mit dem das Anschlagelement 20 verstellbar ist. Der Verstellhebel 32 ist an seinem einen Ende mit dem Anschlagelement 20 verbunden. An seinem anderen Ende ist er in der Befestigungskulisse 34 festgelegt. Über den Verstellhebel 32 wird das Anschlagelement 20 in einer Schwenklage ohne eine Anspannung des Verstellhebels 32 gehalten. Zur Verstellung der Schwenklage des Anschlagelements 20 wird das freie Ende des Verstellhebels 32 in eine neue Position bewegt, die der neuen gewünschten Schwenklage des Anschlagelements 20 entspricht, und dort in der Befestigungskulisse 34 festgelegt. Da sich das Anschlagelement 20 noch in seiner ursprünglichen Position befindet, bauen sich dabei im Verstellhebel 32 Rückstellkräfte auf. Damit das möglich ist, verfügt der Verstellhebel 32 durch sein Material und die gewählte Materialstärke über eine gewisse Eigenflexibilität. Wenn dann der Bolzen 16 durch ein Anheben oder Abkippen des Seitenrahmenabschnitts 6 im Langloch 18 in eine Position bewegt wird, in der er sich im Verstellbereich 32 zwischen den Anschlägen 22 der vorgewählten Schwenklage des Anschlagelements 20 befindet, so gleitet das Anschlagelement 20 von den im Verstellhebel 32 aufgebauten Rückstellkräften getrieben in die vorgewählte Schwenklage. An ihrem dem Bolzen 16 abgewandten Ende ist die Feder 12 mit einem Haltebolzen 38 am starren Rahmenkörper 14 festgelegt. Der Haltebolzen 38 kann seinerseits in einer Kulisse geführt sein, um die Vorspannung der Feder 12 wahlweise verstellen zu können.

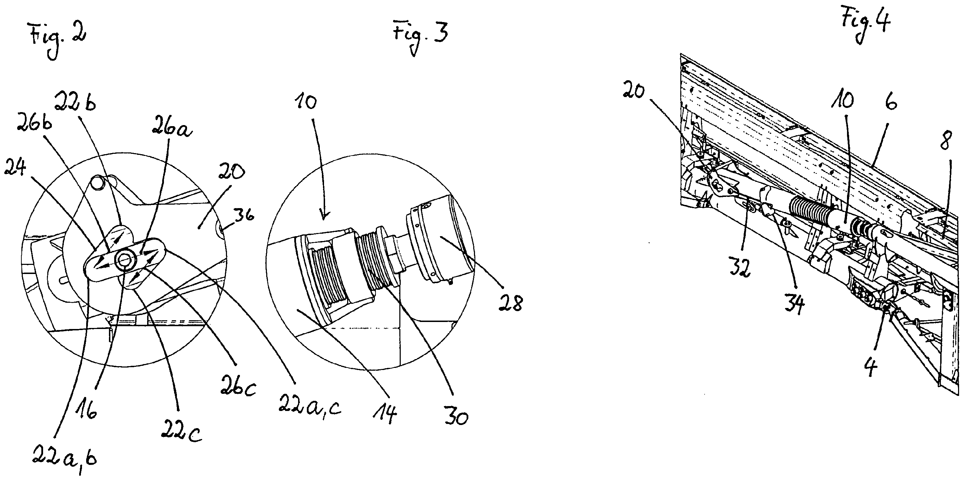

In Fig. 1 zeigt der Kreis II den Ausschnitt, der in Fig. 2 vergrößert dargestellt ist. Der Kreis III zeigt den Ausschnitt, der in Fig. 3 gezeigt ist.

In Fig. 2 ist eine ausschnittweise Vergrößerung des Langlochs 18 mit dem darin beweglichen Bolzen 16 und dem Anschlagelement 20 in einer ersten Schwenklage gezeigt. Die aktuelle Schwenklage des Anschlagelements 20 bewirkt für den Bolzen 16 den Verstellbereich 26a, der von den Anschlägen 22a endseitig begrenzt ist. Die außerdem schwenklagenabhängig möglichen und von der Kulisse 24 vorgegebenen Verstellbereiche 26b und 26c mit den Anschlägen 22b und 22c sind ebenfalls eingezeichnet. Der Schraubbolzen 36, um den das Anschlagelement 20 verschwenkbar ist, ist in Fig. 2 noch angeschnitten erkennbar.

In Fig. 3 ist eine ausschnittweise Vergrößerung des oberen Endes des starren Raumkörpers 14 gezeigt. Über das Kugelgelenk 28 ist der starre Raumkörper 14 mit dem mittleren Rahmenabschnitt verbunden. Erkennbar ist auch das als Tellerfederpaket ausgebildete Federelement 30.

In Fig. 4 ist eine ausschnittweise Ansicht von schräg hinten auf das Entlastungselement 10 mit dem Verstellhebel 32 gezeigt. Der Verstellhebel 32 befindet sich in der Darstellung in einer mittleren Position. Aus dieser Position kann der Verstellhebel 32 in die darunter oder darüber befindlichen Rastpositionen an der Befestigungskulisse 34 verstellt werden.

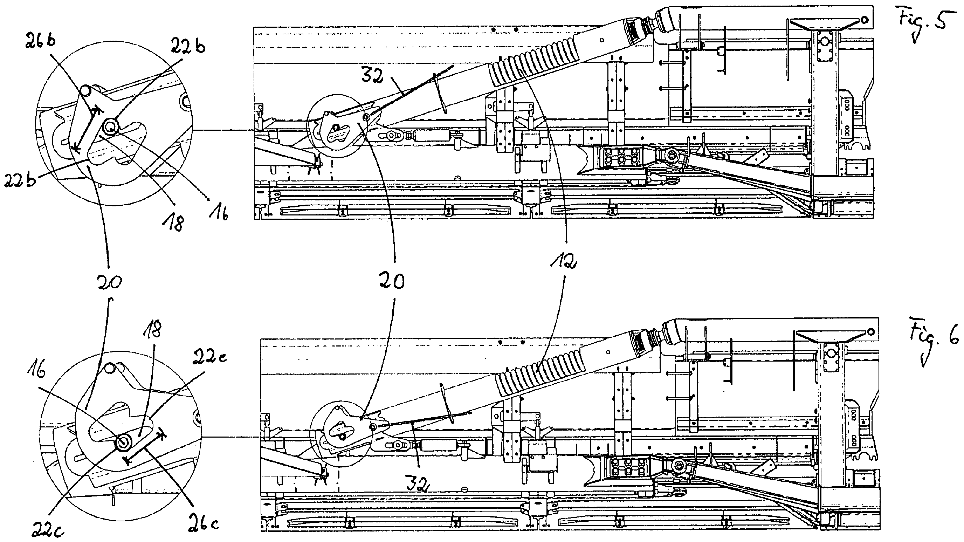

Die Fig. 5 zeigt eine Ansicht des Anschlagelements 20 in einer zweiten Schwenkstellung. In dieser Schwenkstellung ist der Verstellbereich 26b gegenüber dem Verstellbereich 26a, der der in den Fig. 1 und 2 gezeigten Schwenkstellung entspricht,verkürzt. Durch den insbesondere nach oben hin in der Kulisse 26 durch den Anschlag 22b verkürzten Verstellbereich 26b schlägt der Bolzen 16 so früh am oberen Anschlag 22b an, dass der Seitenrahmenabschnitt 6 mit seinem freien Ende nicht mehr über die Nulllage oder einer anderen oberen maximalen Schwenkstellung gegenüber dem mittleren Rahmenabschnitt 8 hinaus nach oben verschwenkt werden kann. Durch den weiter von der Nulllage entfernten unteren Anschlag 22b bleibt eine Ausfederbewegung der Feder 12 und damit eine Verschwenkung des freien Endes des Seitenrahmenabschnitts 6 nach unten hin gemäß der Länge des Verstellbereichs 26b möglich.

Schließlich zeigt Fig. 6 eine Ansicht des Anschlagelements 20 in einer dritten Schwenkstellung. Durch den insbesondere nach unten hin durch den unteren Anschlag 22c verkürzten Verstellbereich 26c schlägt der Bolzen 16 so früh am unteren Anschlag 22c an, dass der Seitenrahmenabschnitt 6 mit seinem freien Ende nicht mehr über die Nulllage gegenüber dem mittleren Rahmenabschnitt 8 hinaus nach unten verschwenkt werden kann. Durch den weiter von der Nulllage entfernten oberen Anschlag 22c bleibt eine Einfederbewegung der Feder 12 und damit eine Verschwenkung des freien Endes des Seitenrahmenabschnitts 6 nach oben hin gemäß der Länge des Verstellbereichs 26c aber möglich.

Die Erfindung ist nicht auf das vorstehende Ausführungsbeispiel beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

## Patentansprüche

1. Schneidwerk (2) mit mehreren gelenkig miteinander verbundenen Rahmenabschnitten, die jeweils eine Teilarbeitsbreite des Schneidwerks (2) bilden, wobei äußere Seitenrahmenabschnitte (6) mit einem mittleren Rahmenabschnitt (8) über ein zwischen einer federnden Einstellung und einer gesperrten Einstellung verstellbares Entlastungselement (10) miteinander verbunden sind, **dadurch gekennzeichnet, dass** das Entlastungselement (10) eine in Belastungsrichtung bewegliche Feder (12) und einen in Belastungsrichtung starren Raumkörper (14) aufweist, wobei die Feder (12) mit dem Seitenrahmenabschnitt (6) über einen Bolzen (16) verbunden ist, der in einem am starren Raumkörper (14) ausgebildeten Langloch (18) geführt ist, wobei der Federweg der Feder (12) durch ein zwischen verschiedenen Schwenkstellungen verschwenkbares Anschlagelement (20) über an dem Anschlagelement (20) ausgebildete Anschläge (22) verstellbar ist, und das Anschlagelement (20) mindestens zwei verschiedene Anschläge (22) aufweist.

2. Schneidwerk (2) nach Anspruch 1, **dadurch gekennzeichnet, dass** das Anschlagelement (20) als verschwenkbares Blech ausgestaltet ist, das eine Kulisse (24) aufweist, die je nach Schwenkstellung des Anschlagelements (20) die jeweiligen Anschläge (22) ausbildet.

3. Schneidwerk (2) nach Anspruch 1 oder 2, **dadurch gekennzeichnet, dass** das Anschlagelement (20) mindestens eine erste Schwenkstellung, in der die Anschläge (22) so ausgestaltet sind, dass der Federweg der Feder (12) von der Nulllage des Seitenrahmenabschnitts (6) aus sowohl ein Einfedern als auch ein Ausfedern der Feder (12) zulässt, sowie eine zweite Schwenkstellung, in der die Anschläge (22) so ausgestaltet sind, dass der Federweg der Feder (12) von der Nulllage des Seitenrahmenabschnitts (6) aus nur ein Einfedern oder ein Ausfedern der Feder (12) zulässt, aufweist.

4. Schneidwerk (2) nach einem der vorhergehenden Ansprüche, **dadurch gekennzeichnet, dass** das Anschlagelement (20) in einer mittleren Stellung den größten Verstellbereich (26) und in den von der mittleren Stellung abweichenden Stellungen kleinere Verstellbereiche (26) zwischen den Anschlägen (22) aufweist.

5. Schneidwerk (2) nach einem der vorhergehenden Ansprüche, **dadurch gekennzeichnet, dass** das Anschlagelement (20) schwenkbar am starren Raumkörper (14) befestigt ist.

6. Schneidwerk (2) nach einem der vorhergehenden Ansprüche, **dadurch gekennzeichnet, dass** der starre Raumkörper (14) als Rohr ausgebildet ist, in dessen Innenraum die Feder (12) eingesetzt ist.

7. Schneidwerk (2) nach einem der vorhergehenden Ansprüche, **dadurch gekennzeichnet, dass** der starre Raumkörper (14) über ein Kugelgelenk (28) mit dem mittleren Rahmenabschnitt (8) verbunden und zwischen dem Kugelgelenk (28) und dem starren Raumkörper (14) ein Federelement (30) eingesetzt ist.

8. Schneidwerk (2) nach einem der vorhergehenden Ansprüche, **dadurch gekennzeichnet, dass** das Anschlagelement (20) mit einem in die Verstellrichtung flexiblen Verstellhebel (32) verbunden ist, und beabstandet zum Anschlagelement (20) eine Befestigungskulisse (34) angeordnet ist, in der der Verstellhebel (32) in einer der aktuellen Stellung des Anschlagelements (20) entsprechenden oder in einer der aktuellen Stellung des Anschlagelements (20) nicht entsprechenden Stellung fixierbar ist.

9. Schneidwerk (2) nach einem der vorhergehenden Ansprüche, **dadurch gekennzeichnet, dass** einzelne Anschläge (22a, 22b, 22c) in der Kulisse (24) den Anschlag für mehrere Verstellbereiche (26) bilden.

## Claims

1. Header (2) comprising a plurality of hingedly interconnected frame portions that each form a partial working width of the header (2), outer lateral frame portions (6) and a central frame portion (8) being interconnected via a load relief element (10) that is adjustable between a resilient setting and a locked setting, **characterised in that** the load relief element (10) comprises a spring (12) that is movable in a loading direction and a spatial body (14) that is rigid in the loading direction, the spring (12) being connected to the lateral frame portion (6) by a bolt (16) that is guided in a slot (18) formed on the rigid spatial body (14), a stop element (20) that is pivotable between various pivot positions being able to adjust the spring travel of the spring (12) by means of stops (22) formed on the stop element (20), and the stop element (20) comprising at least two different stops (22).

2. Header (2) according to claim 1, **characterised in that** the stop element (20) is formed as a pivotable metal sheet that comprises a link (24) which forms the relevant stops (22) depending on the pivot position of the stop element (20).

3. Header (2) according to either claim 1 or claim 2, **characterised in that** the stop element (20) has at least one first pivot position in which the stops (22) are arranged such that the spring travel of the spring (12), from the zero position of the lateral frame portion (6), permits both compression and stretching of the spring (12), and a second pivot position in which the stops (22) are arranged such that the spring travel of the spring (12), from the zero position of the lateral frame portion (6), permits only compression of the spring or only stretching of the spring (12).

4. Header (2) according to any of the preceding claims, **characterised in that**, in a central position, the stop element (20) has the maximum adjusting range (26) between the stops (22), and in the positions deviating from the central position has smaller adjusting ranges (26) between said stops.

5. Header (2) according to any of the preceding claims, **characterised in that** the stop element (20) is pivotally fastened to the rigid spatial body (14).

6. Header (2) according to any of the preceding claims, **characterised in that** the rigid spatial body (14) is designed as a tube inside which the spring (12) is inserted.

7. Header (2) according to any of the preceding claims, **characterised in that** the rigid spatial body (14) is connected by a ball joint (28) to the central frame portion (8), and a spring element (30) is inserted between the ball joint (28) and the rigid spatial body (14).

8. Header (2) according to any of the preceding claims, **characterised in that** the stop element (20) is connected to an adjusting lever (32) that is flexible in the adjusting direction, and a fastening link (34) is arranged at a spacing from the stop element (20), in which fastening link the adjusting lever (32) is securable in a position that corresponds to the current position of the stop element (20) or in a position that does not correspond to the current position of the stop element (20).

9. Header (2) according to any of the preceding claims, **characterised in that** individual stops (22a, 22b, 22c) in the link (24) form the stop for a plurality of adjusting ranges (26).

## Revendications

1. Unité de coupe (2) comprenant une pluralité de parties de cadre reliées entre elles de manière articulée et formant chacune une largeur de travail partielle de l'unité de coupe (2), les parties de cadre latérales extérieures (6) pourvue d'une partie de cadre centrale (8) étant reliées entre elles par un élément d'équilibrage (10) déplaçable entre un réglage élastique et un réglage verrouillé, **caractérisé en ce que** l'élément de soulagement (10) comprend un ressort mobile dans le sens de contrainte (12) et un corps volumique (14) immobile dans le sens de contrainte, le ressort (12) étant relié à la partie de cadre latéral (6) par le biais d'un boulon (16) qui est guidé dans un trou allongé (18) formé au niveau du corps volumique immobile (14), le débattement du ressort (12) étant réglable au moyen d'un élément de butée (20) apte à pivoter entre différentes positions de pivotement par le biais de butées (22) formées sur l'élément de butée (20), et l'élément de butée (20) comportant au moins deux butées différentes (22).

2. Unité de coupe (2) selon la revendication 1, **caractérisée en ce que** l'élément de butée (20) est réalisé sous la forme d'une tôle pivotante qui comporte une coulisse (24) qui forme les butées respectives (22) en fonction de la position de pivotement de l'élément de butée (20).

3. Unité de coupe (2) selon la revendication 1 ou 2, **caractérisé en ce que** l'élément de butée (20) possède au moins une première position de pivotement, dans laquelle les butées (22) sont conçues de telle sorte que le débattement du ressort (12) permet, à partir de la position zéro de la partie de cadre latérale (6), à la fois une compression et une détente du ressort (12), et une seconde position de pivotement dans laquelle les butées (22) sont conçues de telle sorte que le débattement du ressort (12) permet, à partir de la position zéro de la partie de cadre latéral (6), seulement une compression ou une détente du ressort (12).

4. Unité de coupe (2) selon l'une des revendications précédentes, **caractérisée en ce que** l'élément de butée (20) possède, dans une position intermédiaire, la plus grande zone de réglage (26) et, dans les positions s'écartant de la position médiane, de plus petites zones de réglage (26) entre les butées (22).

5. Unité de coupe (2) selon l'une des revendications précédentes, **caractérisée en ce que** l'élément de butée (20) est fixée de façon pivotante au corps volumique immobile (14).

6. Unité de coupe (2) selon l'une des revendications précédentes, **caractérisée en ce que** le corps volumique immobile (14) est conçu comme un tube à l'intérieur duquel est inséré le ressort (12).

7. Unité de coupe (2) selon l'une des revendications précédentes, **caractérisée en ce que** le corps volumique immobile (14) est relié à la partie de cadre central (8) par le biais d'un joint à rotule (28) et un élément à ressort (30) est inséré entre le joint à rotule (28) et le corps volumique immobile (14).

8. Unité de coupe (2) selon l'une des revendications précédentes, **caractérisée en ce que** l'élément de butée (20) est relié à un levier de réglage (32) flexible dans le sens de réglage et à distance de l'élément de butée (20) est disposée une coulisse de fixation (34) dans laquelle le levier de réglage (32) peut être fixé dans une position qui correspond à la position actuelle de l'élément de butée (20) ou qui ne correspond pas à la position actuelle de l'élément de butée (20).

9. Unité de coupe (2) selon l'une des revendications précédentes, **caractérisée en ce que** des butées individuelles (22a, 22b, 22c) forment dans la coulisse (24) la butée destinée à une pluralité de zones de réglage (26).
